# FASCICULE DE BREVET EUROPEEN

(11) **EP 1 413 421 B1**
(45) Date de publication et mention de la délivrance du brevet: **08.08.2007**
(21) Numéro de dépôt: 03292555.4
(22) Date de dépôt: 14.10.2003
(51) Int. Cl.: B29C 70/54, B29C 70/44

(54) **Dispositif pour la réalisation de structures en matériaux composites**
Vorrichtung zur Herstellung von Verbundwerkstoffstrukturen
Apparatus for the production of composite structures

(30) Priorité: 24.10.2002 FR 0213278
(43) Date de publication de la demande: 28.04.2004
(73) Titulaire: DCN, 75015 Paris (FR)
(72) Inventeur: Parneix, Patrick, 56260 Larmor-Plage (FR); Rousseau, Loic, 56100 Lorient (FR)
(74) Mandataire: Lagrange, Jacques Etienne M.M.

(56) Documents cités:
- EP-A- 0 841 145
- DE-C- 19 853 709
- US-A- 4 132 755
- US-A- 4 942 013
- US-A- 5 052 906

## Description

Le secteur technique de la présente invention est celui des dispositifs d'imprégnation de fibres par de la résine pour la réalisation de structures en matériaux composites. Plus particulièrement, le domaine dans lequel s'inscrit l'invention concerne celui des dispositifs permettant la réalisation de structures très épaisses, du type pièces dont l'épaisseur est supérieure à 60 mm.

Dans ce domaine, plusieurs réalisations ont déjà été proposées.

On connaît les brevets US 4.902.215, et US 5.439.635 qui décrivent des dispositifs et des procédés relatifs à la réalisation de structures en matériaux composites et qui utilisent une dépression pour faire pénétrer la résine à l'intérieur des fibres à imprégner. La résine est alors injectée dans le dispositif, puis aspirée par des moyens permettant d'opérer un vide à l'intérieur de la chambre où se trouvent les couches de fibres.

Cependant, on peut noter les prises d'aspiration telles que décrites dans ces documents, se situent à la périphérie de la pièce à imprégner ; l'aspiration s'effectue donc par l'intermédiaire de plusieurs canaux latéraux de section étroite.

On connaît également par EP 0 841 145, conformément au préambule de la revendication 1, un procédé selon lequel la pièce à imprégner est disposée sur le fond d'un moule, recouverte de résine, puis d'un film étanche, puis le moule est soumis à un vide.

L'inconvénient majeur de ces dispositions est que le flux de la résine est peu contrôlé et que la dépression créée à l'intérieur de la chambre n'est pas homogène. De plus, pour obtenir un front de progression régulier de la résine, les réalisations proposées dans l'art antérieur nécessitent l'utilisation de moyens de distribution de la résine à la fois sur la partie supérieure de l'ensemble à imprégner, ainsi que sous la partie inférieure de ce dernier. Ces éléments rajoutés ont pour fonction de répartir correctement la résine selon un plan parallèle à celui des différentes couches, afin d'éviter une imprégnation irrégulière des fibres provoquée par la disposition périphérique des canaux d'aspiration.

Le but de l'invention est donc de permettre la réalisation d'un dispositif simple d'imprégnation de fibres par de la résine pour créer une structure en matériaux composites, permettant d'assurer un front de migration de la résine régulier et parallèle aux différentes couches de fibres à imprégner, sans avoir recours à des moyens de distribution de la résine pour assurer la dépression homogène à l'intérieur de la chambre où se trouve ces différentes couches de fibres.

Pour ce faire, l'invention a pour objet un dispositif d'imprégnation de fibres par de la résine pour la réalisation de structures en matériaux composites, notamment du type structures épaisses, comprenant un caisson creux muni d'une prise d'aspiration de la résine se situant sous un élément perforé du type grille ayant une surface inférieure ainsi qu'une surface supérieure et apte à prendre appui sur ledit caisson creux par l'intermédiaire de la surface inférieure, ledit dispositif comprenant en outre des moyens du type bâche, recouvrant l'ensemble des couches de fibres et formant une chambre étanche avec ledit caisson creux. La surface de contact entre la prise d'aspiration et la face inférieure de l'élément perforé, située en regard de l'ensemble formé par les couches de fibres, est au moins égale à la surface de projection de l'ensemble formé par lesdites couches de fibres sur cette même face inférieure dudit élément perforé l'élément perforé est apte à supporter sur sa face supérieure un ensemble constitué d'une ou plusieurs couches de fibres empilées les unes sur les autres et destinées à former une structure en matériaux composites, et les moyens recouvrant l'ensemble des couches de fibres comportent des moyens d'admission de la résine.

Ce dispositif présente l'avantage d'avoir un contrôle parfait de la migration de la résine, sans pour autant avoir recours à des moyens de distribution de la résine. Par le biais de stratégies judicieuses au niveau du différentiel de pression et des caractéristiques rhéologigues de la résine employée, un autre avantage de l'invention est de pouvoir à l'aide du dispositif selon l'invention, obtenir une excellente imprégnation pour des pièces dont l'épaisseur peut excéder 60 mm.

Avantageusement, le dispositif utilise des moyens de type grille permettant de remplir une fonction d'aspiration, mais également une fonction de moulage grâce à la possibilité de réaliser une forme au choix de la face supérieure des moyens du type grille. On peut par conséquent utiliser une multitude de grilles ayant des profils différents qui donneront alors lieu à autant de structures composites de formes différentes.

D'autres caractéristiques et avantages de l'invention apparaîtront, dans la description détaillée, non limitative, ci-dessous.

Cette description sera faite au regard des dessins annexés par lesquels :
- la figure 1 représente schématiquement une vue en coupe longitudinale du dispositif d'imprégnation selon l'invention, en fin de la phase d'aspiration ;
- la figure 2 représente le détail A de la figure 1.

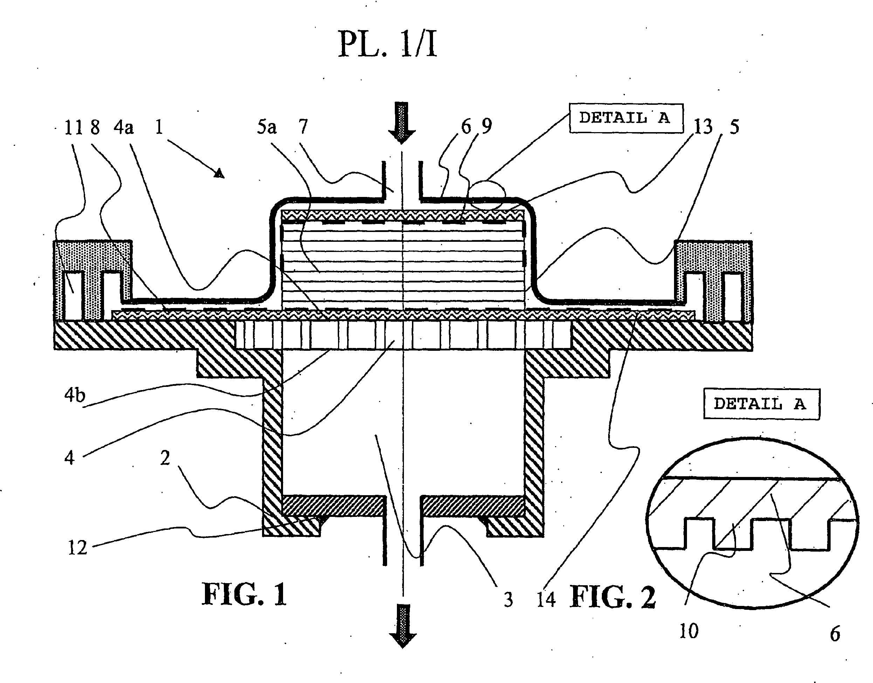

En référence aux figures 1 et 2, on voit un dispositif 1 d'imprégnation de fibres par de la résine pour la réalisation de structures en matériaux composites. Ce dispositif s'applique pour toutes sortes de structures de géométries différentes, notamment pour les structures dont l'épaisseur est supérieure à 60 mm.

Ce dispositif 1 est tout d'abord constitué d'une base étant un caisson creux 2, pouvant être raidi si cela s'avère nécessaire du fait de la taille de la pièce. Dans sa partie base, il dispose d'une prise d'aspiration 3 avec laquelle l'étanchéité réalisée est parfaite. Cette étanchéité pourra être notamment renforcée à l'aide d'un joint élastomère 12. Ce caisson creux 2 est fermé dans sa partie haute par un élément perforé du type grille 4, cette grille ayant une face supérieure 4a et une face inférieure 4b ; elle repose alors en appui sur le caisson creux 2 par l'intermédiaire de sa face inférieure 4b. L'élément perforé 4 peut alors se matérialiser sous différents aspects comme un grillage rigide ou encore une plaque métallique perforée ; si pour des raisons de contraintes mécaniques l'élément perforé 4 nécessite d'être raidi, alors le raidissage pourra également prendre appui sur le caisson creux 2. Ce raidissage devra à la fois prendre en compte la masse de chacun des composants comme la grille ou la structure composite à réaliser, mais également les paramètres de la dépression créée pour faire migrer la résine.

Sur la face supérieure 4a de la grille 4, repose un ensemble 5 constitué de différentes couches de fibres 5a, destinées à être imprégnées de résine pour former la structure composite. Ces plis secs déposés sur la grille 4 constituent donc la préforme du composite à réaliser. De façon préférentielle, il est souhaitable que ces plis soient prédécoupés de façon régulière et non de manière anarchique, ceci ayant pour principal but d'éviter la création préférentielle de canaux périphériques de migration de la résine.

Des moyens du type bâche 6 recouvrent alors l'ensemble 5 et forment une chambre étanche avec le caisson creux 2. Cette bâche 6 pourra permettre à la fois la mise sous vide de la chambre dans laquelle se trouve la structure à imprégner, mais également l'admission de la résine. La fixation de la bâche 6 avec le caisson 2 s'établie de manière préférentielle par l'intermédiaire d'un canal de vide de fixation 11 ; cette fixation de la bâche par aspiration périphérique n'est pas indispensable ou pourrait tout aussi bien être remplacée par un joint adhésif quelconque voire une fixation mécanique étanche. Il est à noter qu'un aspect non négligeable du dispositif est de manager en périphérie de la grille, une plage technique suffisamment grande pour que la résine n'atteigne pas le canal de fixation 11 de la bâche 6. Cette plage technique doit constituer un frein à la migration de la résine soit en employant des matériaux difficilement perméables, soit en occasionnant un pincement.

La bâche 6 comporte dans sa partie recouvrant le dessus de l'ensemble 5, des moyens d'admission de la résine 7. L'admission de cette résine peut se réaliser par l'intermédiaire d'une canalisation obturable, plongeant dans un récipient de résine catalysée. La réussite de l'imprégnation est en effet conditionnée par le fait qu'à aucun moment, de l'air ne puisse être admis dans la chambre étanche où se trouvent les couches de fibres à imprégner. On pourra alors veiller à ce que le récipient source recouvre largement l'entrée dans le tuyau d'alimentation. Préférentiellement, la bâche 6 comporte comme vu sur la figure 2, des moyens de distribution de la résine du type picots, permettant une distribution plus régulière de la résine sur la partie supérieure de l'ensemble 5 formé par les différentes couches de fibres 5a. Une description plus détaillée de ces picots se trouve dans le document W.H. SEEMANN US 5.439.635. Une alternative peut consister à disposer d'une bâche lisse permettant d'assurer la fonction étanchéité, et d'un matériau de drainage positionné entre la bâche et les tissus secs (préforme fibreuse).

Dans le dispositif 1 selon l'invention, la prise d'aspiration 3 se situe en regard de l'ensemble 5 des couches de fibre 5a, ces deux éléments étant séparés par l'intermédiaire de la grille 4. La surface de contact entre la prise d'aspiration 3 et la face inférieure 4b de la grille 4 est au moins sensiblement égale à la surface de projection de l'ensemble 5 sur cette face supérieure 4a de la grille 4. En d'autres termes, la prise d'aspiration 3 est réalisée de manière à ce que sa surface au niveau de la grille 4 soit suffisamment importante pour appliquer une dépression parfaitement homogène en tout point de la pièce. Par exemple, ceci se traduit alors, pour un composite de forme parallélépipédique, par une surface de la section de la prise d'aspiration étant au moins égale à la surface de la section transversale de la structure en composite. Il est à noter que la section de la prise d'aspiration est de surface constante sur une longueur assez importante pouvant dépasser l'épaisseur de la préforme.

Selon un mode de réalisation préférentiel de l'invention, un film séparateur 8 du type tissu d'arrachage peut être interposé entre la face supérieure 4a de la grille 4 et l'ensemble formé 5 par les couches de tissu. Cette adjonction n'est pas nécessaire pour la réalisation de la structure elle-même, mais a pour but de faciliter grandement le nettoyage de la grille 4. Une fine couche de réserve de résine 14 apparaît alors, pendant la phase d'aspiration de cette dernière, entre la grille 4 et le film 8. De la même manière, un second film séparateur 9 peut également être utilisé entre la face supérieure de l'ensemble 5 et les moyens du type bâche 6 ; notons qu'après l'amorçage de l'admission de la résine, une seconde réserve de résine 13 apparaît sous la forme d'une fine couche se situant entre le film séparateur 9 et la bâche 6.

De manière préférentielle, le dispositif 1 selon l'invention comporte une grille 4 permettant de remplir une double fonction ; il s'agit de l'aspiration de la résine grâce aux différentes perforations de la grille, ainsi que du moulage de la pièce composite. En effet, le fait de réaliser une forme particulière sur la face supérieure 4a de la grille 4, permet d'obtenir la forme complémentaire à celle de la grille sur la face de l'ensemble 5 en contact avec cette même grille 4. Il est à noter que la grille 4 repose sur une cuve (non représentée) reliée à une pompe, cette cuve étant conçue de manière à ce que différentes géométries de grilles puissent être adaptées permettant ainsi la réalisation d'autant de géométries de pièces.

Le fonctionnement du dispositif selon l'invention est le suivant :
Il est tout d'abord procédé au positionnement de la grille 4 sur le caisson creux 2, en vérifiant simultanément l'étanchéité du joint élastomère 12 (en cas de son éventuelle présence). Par suite, on applique le film séparateur 8 d'arrachage. On installe ensuite les différentes couches de tissu 5a en les positionnant avec rigueur pour éviter les effets de bords pouvant survenir à la suite d'une mauvaise manipulation des fibres.
Notons que dans le cas d'une structure sandwich ou de positionnement d'inserts, on peut réaliser un perçage à travers l'âme ou à travers l'insert afin de favoriser la migration du flux de résine de part et d'autre de l'obstacle.
Une fois les étapes suivantes réalisées, on installe le film séparateur 9 ainsi que la bâche 6, puis on effectue la mise sous vide de cette dernière. L'admission de la résine étant amorcée, on réalise alors un pilotage de l'imprégnation en faisant varier la dépression pratiquée dans la chambre. Il est enfin important de mentionner qu'il s'avère préférable entreprendre un maintien du compactage pendant la phase de gel.
Ce concept de moule/grille qui vient d'être décrit peut également s'appliquer au moulage par projection de résine, par projection simultanée de fibres/résine, ou encore à la centrifugation (rotor moulage).

Bien entendu, diverses modifications peuvent être apportées par l'homme du métier au dispositif d'imprégnation qui vient être décrit, uniquement à titre d'exemple non limitatif, sans sortir du cadre de protection défini par les revendications annexées.

## Revendications

1. Dispositif (1) d'imprégnation de fibres par de la résine pour la réalisation de structures en matériaux composites, comprenant un caisson creux (2) muni d'une prise d'aspiration (3) de la résine se situant sous un élément perforé (4) ayant une surface inférieure (4b) ainsi qu'une surface supérieure (4a) et apte à prendre appui sur ledit caisson creux (2) par l'intermédiaire de la surface inférieure (4b), ledit dispositif (1) comprenant en outre des moyens (6) recouvrant l'ensemble (5) des couches de fibres et formant une chambre étanche avec ledit caisson creux (2), **caractérisé en ce que** la surface de contact entre la prise d'aspiration (3) et la face inférieure (4b) de l'élément perforé (4), situé en regard de l'ensemble (5) formé par les couches de fibres (5a), est au moins égale à la surface de projection de l'ensemble (5) formé par lesdites couches de fibres (5a) sur cette même face inférieure (4b) dudit élément perforé (4) et **en ce que** l'élément perforé (4) est apte à supporter sur sa partie supérieure (4a) un ensemble (5) constitué d'une ou plusieurs couches (5a) de fibres empilées les unes sur les autres et destinées à former une structure en matériaux composites, et **en ce que** les moyens (6) recouvrant l'ensemble (5) des couches de fibres comportent des moyens d'admission (7) de la résine.

2. Dispositif (1) d'imprégnation de fibres par de la résine pour la réalisation de structures en matériaux composites selon la revendication 1, dans lequel la face supérieure (4a) de l'élément perforé (4) a une forme complémentaire de celle de la pièce à réaliser.

3. Dispositif (1) d'imprégnation de fibres par de la résine pour la réalisation de structures en matériaux composites selon la revendication 1 ou la revendication 2, dans lequel un film séparateur (8) est situé entre la face supérieure (4a) de l'élément perforé (4) et l'ensemble (5) de couches de fibres (5a).

4. Dispositif (1) d'imprégnation de fibres par de la résine pour la réalisation de structure en matériaux composites selon l'une quelconque des revendications précédentes, dans lequel un film séparateur (9) est situé entre l'ensemble (5) de couches de fibres (5a) et les moyens (6) recouvrant l'ensemble des couches de fibres.

5. Dispositif (1) d'imprégnation de fibres par de la résine pour la réalisation de structures en matériaux composites selon l'une quelconque des revendications précédentes, dans lequel l'élément perforé (4) comporte un raidissage étant apte à prendre appui sur le caisson creux (2).

6. Dispositif (1) d'imprégnation de fibres par de la résine pour la réalisation de structures en matériaux composites selon l'une quelconque des revendications précédentes, dans lequel l'élément perforé (4) est une plaque métallique perforée ou un grillage rigide.

7. Dispositif (1) d'imprégnation de fibres par de la résine pour la réalisation de structures en matériaux composites selon l'une quelconque des revendications précédentes, dans lequel l'étanchéité entre le caisson creux (2) et la prise d'aspiration (3), au niveau de la partie basse dudit caisson creux (2) est réalisée par l'intermédiaire d'un joint élastomère .

8. Dispositif (1) d'imprégnation de fibres par de la résine pour la réalisation de structures en matériaux composites selon l'une quelconque des revendications précédentes, dans lequel les moyens (6) recouvrant l'ensemble des couches de fibres comportent dans la partie recouvrant la face supérieure de l'ensemble (5), des moyens de distribution de la résine (10).

9. Dispositif (1) d'imprégnation de fibres par de la résine pour la réalisation de structures en matériaux composites selon l'une quelconque des revendications précédente, dans lequel les moyens (6) recouvrant l'ensemble des couches de fibres sont constitués d'une bâche et en ce que la fixation de la bâche (6) par aspiration s'effectue à l'aide d'un canal (11) de vide de fixation.

10. Dispositif (1) d'imprégnation de fibres par de la résine pour la réalisation de structures en matériaux composites selon l'une quelconque des revendications précédentes, dans lequel l'admission de la résine s'effectue par l'intermédiaire d'une canalisation de résine catalysée.

## Claims

1. - Device (1) for impregnating fibres with resin to manufacture structures of composite materials comprising a hollow enclosure (2) provided with a resin intake (3) located beneath a perforated member (4) having a bottom surface (4b) and a top surface (4a) and capable of resting on the said hollow enclosure (2) through the bottom surface (4b), the said device (1) further comprising means (6) covering the assembly (5) of layers of fibres and forming a leaktight chamber with the said hollow enclosure (2), **characterised in that** the contact surface between the intake (3) and the bottom surface (4b) of the perforated member (4) opposite the assembly (5) formed by the layers of fibres (5a) is at least equal to the projection of the surface area of the assembly (5) formed by the said layers of fibres (5a) onto the same bottom surface (4b) of the aforesaid perforated member (4) and **in that** the perforated member (4) is capable of supporting an assembly (5) comprising one or more layers (5a) of fibres stacked upon one another and intended to form a structure of composite material on its top part (4a) and **in that** the means (6) covering the assembly (5) of layers of fibres comprise means for delivery (7) of the resin.

2. - Device (1) for impregnating fibres with resin for manufacturing structures of composite materials according to claim 1, in which the top surface (4a) of the perforated member (4) has a shape matching that of the piece being manufactured.

3. - Device (1) for impregnating fibres with resin for manufacturing structures of composite materials according to claim 1 or claim 2, in which a separating film (8) is located between the top surface (4a) of the perforated member (4) and the assembly (5) of layers of fibres (5a).

4. - Device (1) for impregnating fibres with resin for manufacturing a structure of composite materials according to any one of the preceding claims, in which a separating film (9) is located between the assembly (5) of layers of fibres (5a) and the means (6) covering the assembly of layers of fibres.

5. - Device (1) for impregnating fibres with resin for manufacturing structures of composite materials according to any one of the preceding claims, in which the perforated member (4) comprises stiffening which can be supported on the hollow enclosure (2).

6. - Device (1) for impregnating fibres with resin for the manufacture of structures of composite materials according to any one of the preceding claims, in which the perforated member (4) is a perforated metal plate or rigid grid.

7. - Device (1) for impregnating fibres with resin for manufacturing structures of composite materials according to any one of the preceding claims, in which the seal between the hollow enclosure (2) and the intake (3) in the bottom of the said hollow enclosure (2) is provided through an elastomer seal.

8. - Device (1) for impregnating fibres with resin for manufacturing structures of composite materials according to any one of the preceding claims, in which the means (6) covering the assembly of fibre layers comprises means (10) for distributing the resin in the part covering the top surface of the assembly (5).

9. - Device (1) for impregnating fibres with resin for manufacturing structures of composite materials according to any one of the preceding claims, in which the means (6) covering the assembly of fibre layers comprise a cover and in which attachment of the cover (6) through suction is brought about by means of a securing vacuum channel (11).

10. - Device (1) for impregnating fibres with resin for manufacturing structures of composite materials according to any one of the preceding claims, in which the resin is delivered through a catalysed resin pipe.

## Patentansprüche

1. Vorrichtung (1) zum Tränken von Fasern mit Harz für die Herstellung von Strukturen aus Verbundwerkstoffen, umfassend einen hohlen Kasten (2), der mit einem Anschluss (3) zum Ansaugen des Harzes versehen ist, der unter einem perforierten Element (4) gelegen ist, das eine Unterseite (4b) sowie eine Oberseite (4a) besitzt und in der Lage ist, auf dem hohlen Kasten (2) über die Unterseite (4b) aufzuliegen, wobei die Vorrichtung (1) ferner Mittel (6) umfasst, die die Einheit (5) der Faserschichten bedecken und mit diesem hohlen Kasten (2) eine dichte Kammer bilden, **dadurch gekennzeichnet, dass** die Kontaktfläche zwischen dem Ansauganschluss (3) und der Unterseite (4b) des perforierten Elements (4), das gegenüber der von den Faserschichten (5a) gebildeten Einheit (5) gelegen ist, mindestens gleich der Fläche der Projektion der von diesen Faserschichten (5a) gebildeten Einheit (5) auf ebendiese Unterseite (4b) des perforierten Elements (4) ist und dass das perforierte Element (4) in der Lage ist, auf seinem oberen Teil (4a) eine Einheit (5) zu tragen, die aus einer oder mehreren Faserschichten (5a) besteht, die übereinander gestapelt sind und dazu bestimmt sind, eine Struktur aus Verbundwerkstoffen zu bilden, und dass die die Einheit (5) der Faserschichten bedeckenden Mittel (6) Mittel (7) für den Eintritt des Harzes umfassen.

2. Vorrichtung (1) zum Tränken von Fasern mit Harz für die Herstellung von Strukturen aus Verbundwerkstoffen nach Anspruch 1, bei der die Oberseite (4a) des perforierten Elements (4) eine zur Form des herzustellenden Werkstücks komplementäre Form hat.

3. Vorrichtung (1) zum Tränken von Fasern mit Harz für die Herstellung von Strukturen aus Verbundwerkstoffen nach Anspruch 1 oder Anspruch 2, bei der zwischen der Oberseite (4a) des perforierten Elements (4) und der Einheit (5) von Faserschichten (5a) eine Trennfolie (8) angeordnet ist.

4. Vorrichtung (1) zum Tränken von Fasern mit Harz für die Herstellung von Strukturen aus Verbundwerkstoffen nach einem der vorhergehenden Ansprüche, bei der zwischen der Einheit (5) von Faserschichten (5a) und den die Einheit der Faserschichten bedeckenden Mitteln (6) eine Trennfolie (9) angeordnet ist.

5. Vorrichtung (1) zum Tränken von Fasern mit Harz für die Herstellung von Strukturen aus Verbundwerkstoffen nach einem der vorhergehenden Ansprüche, bei der das perforierte Element (4) eine Versteifung umfasst, die in der Lage ist, auf dem hohlen Kasten (2) aufzuliegen.

6. Vorrichtung (1) zum Tränken von Fasern mit Harz für die Herstellung von Strukturen aus Verbundwerkstoffen nach einem der vorhergehenden Ansprüche, bei der das perforierte Element (4) eine perforierte Metallplatte oder ein starrer Rost ist.

7. Vorrichtung (1) zum Tränken von Fasern mit Harz für die Herstellung von Strukturen aus Verbundwerkstoffen nach einem der vorhergehenden Ansprüche, bei der die Abdichtung zwischen dem hohlen Kasten (2) und dem Ansauganschluss (3) auf Höhe des unteren Teils dieses hohlen Kastens (2) über eine Elastomerdichtung hergestellt ist.

8. Vorrichtung (1) zum Tränken von Fasern mit Harz für die Herstellung von Strukturen aus Verbundwerkstoffen nach einem der vorhergehenden Ansprüche, bei der die die Einheit der Faserschichten bedeckenden Mittel (6) in dem die Oberseite der Einheit (5) bedekkenden Teil Mittel (10) zur Verteilung des Harzes umfassen.

9. Vorrichtung (1) zum Tränken von Fasern mit Harz für die Herstellung von Strukturen aus Verbundwerkstoffen nach einem der vorhergehenden Ansprüche, bei der die die Einheit der Faserschichten bedeckenden Mittel (6) aus einem Gehäuse bestehen und die Befestigung des Gehäuses (6) durch Ansaugung mit Hilfe eines Befestigungsvakuumkanals (11) stattfindet.

10. Vorrichtung (1) zum Tränken von Fasern mit Harz für die Herstellung von Strukturen aus Verbundwerkstoffen nach einem der vorhergehenden Ansprüche, bei der die Ansaugung des Harzes über eine Leitung für katalysiertes Harz stattfindet.
